# DEMANDE DE BREVET EUROPEEN

(11) **EP 4 714 260 A1**
(43) Date de publication de la demande: **25.03.2026**
(21) Numéro de dépôt: 25200820.6
(22) Date de dépôt: 08.09.2025
(51) Int. Cl.: A01K 7/04, F16K 31/26

(54) **DISPOSITIF DE REMPLISSAGE AUTOMATIQUE D' EAU POUR ABREUVOIR**

(30) Priorité: 23.09.2024 FR 2410129
(71) Demandeur: Rototec, 35540 Miniac-Morvan (FR)
(72) Inventeur: DUBOUIX, Philippe, 86202 Loudun (FR)
(74) Mandataire: Bandpay & Greuter

(57) **Abrégé**

Dispositif de remplissage automatique de liquide (2) pour un abreuvoir (9) comprenant un corps de base (1), un orifice de distribution avec un siège de clapet SC, un basculeur B équipé d'un clapet 5, pour fermer l'orifice de distribution d'eau via le clapet, un flotteur **F,** un levier de commande (LC) monté pivotant sur le corps de base autour d'un deuxième axe (A2), comprenant un bras relié à son extrémité au flotteur et le levier de commande étant équipé d'un galet pousseur (GP), apte à pousser sur une surface de poussée (SP) du basculeur pour fermer le clapet, dans lequel, dans la position fermée, un premier plan (P1), passant par le deuxième axe et par une ligne de poussée (LP) présente un premier angle (θ1) par rapport à un deuxième plan (P2) défini comme le plan local de la surface de poussée, compris entre 75° et 90°.

## Description

La présente invention se rapporte aux dispositifs de remplissage automatique de liquide pour un abreuvoir. Un abreuvoir est un réservoir d'eau avec un accès libre par le haut pour laisser boire un animal.

De tels abreuvoirs sont utilisés en particulier pour abreuver des animaux afin de garder un niveau d'eau généralement constant à leur disposition. De tels abreuvoirs utilisent un dispositif de remplissage automatique, autrement appelé robinet automatique dans le métier. On s'intéresse à la configuration où le dispositif de remplissage automatique est agencé essentiellement à l'intérieur du réservoir.

Un dispositif de remplissage automatique laisse passer de l'eau en provenance d'une arrivée d'eau, jusqu'à ce que le niveau de régulation soit atteint. Il doit donc être fermé lorsque le niveau de régulation est atteint et doit être à l'inverse ouvert lorsque le niveau d'eau est en dessous du niveau de régulation. Un dispositif de remplissage automatique utilise habituellement un flotteur dans son mécanisme de commande.

Dans les solutions connues, un flotteur est fixé à l'extrémité d'un bras de levier relativement long, ce qui occasionne un encombrement assez conséquent. US2013019962, CH106597 et US2014076242 décrivent des exemples de dispositifs à flotteur.

Les inventeurs ont cherché à rendre plus compacte la solution. De manière accessoire, les inventeurs ont cherché une solution compacte qui puisse s'adapter à différentes configurations d'abreuvoir. Au surplus, les inventeurs ont cherché une solution qui convienne pour plusieurs débits de remplissage.

A cet effet il est proposé un dispositif de remplissage automatique de liquide pour un abreuvoir comprenant :
- un corps de base,
- une conduite d'arrivée d'eau, présentant un orifice de distribution d'eau équipé d'un siège de clapet,
- un basculeur équipé d'un élément formant clapet, apte à venir porter sur le siège de clapet pour fermer l'orifice de distribution d'eau, le basculeur étant monté à rotation sur le corps de base autour d'un premier axe,
- un flotteur,
- un levier de commande monté pivotant sur le corps de base autour d'un deuxième axe, comprenant un bras relié à son extrémité au flotteur et le levier de commande étant équipé d'un galet pousseur, apte à pousser sur une surface de poussée du basculeur pour fermer le clapet,
dans lequel, dans la position fermée, l'agencement est tel qu'un premier plan, défini comme un plan passant d'une part par le deuxième axe et d'autre part par une ligne de poussée entre le galet pousseur et la surface de poussée, présente un premier angle par rapport à un deuxième plan défini comme le plan local de la surface de poussée, et ledit premier angle est compris entre 75° et 90°, de préférence entre 80° et 89°.

Avantageusement, cette configuration permet d'avoir un effort de fermeture du clapet suffisamment important pour éviter toute fuite, nonobstant le volume relativement modéré du flotteur, le levier de commande fournissant un effet d'amplification d'effort, et le galet pousseur générant un effet de came performant et peu frottant pour la fermeture. On bénéficie d'un effet de came roulante procuré par le galet pousseur.

Avantageusement, on utilise deux éléments mobiles en rotation, à savoir le basculeur et le levier de commande, l'un coopérant avec l'autre via un galet, pour optimiser les efforts et les courses et rendre le dispositif le plus compact possible.

On obtient ainsi une position de verrouillage robuste, mais aussi réversible. En effet, le seul poids du flotteur permet au levier de commande de reculer et s'éloigner de la position de fermeture, ceci aisément grâce à la présence du galet pousseur qui roule sur la surface de poussée.

On remarque que la fermeture peut être effectuée en créant une précontrainte d'un joint de clapet, cette précontrainte étant uniquement définie par une chaine de cotes maîtrisée par la configuration géométrique imposée par le corps de base, le levier et le galet.

Exprimé d'une autre manière, la configuration propose un effet de genouillère au niveau du galet pousseur, avec un effort de poussée dirigé légèrement en deçà d'une perpendiculaire au plan local de la surface de poussée.

On remarque que la plage de valeur angulaire juste en dessous de 90° permet d'éviter que la genouillère ne se bloque et empêche la réouverture du clapet lors de la descente du niveau d'eau.

On note que le galet pousseur est monté pivotant sur le levier de commande autour d'un troisième axe.

Sous le terme « flotteur », plusieurs solutions peuvent être envisagées, par exemple un flotteur à corps creux ou un flotteur à corps plein de densité inférieure à 1.

Selon une réalisation, dans la position fermée, l'agencement est tel que le premier plan passe en outre sensiblement par le centre du siège de clapet (ou de l'élément formant clapet).

La précontrainte de fermeture est alors définie par une chaine de cotes courte (deuxième axe, petit bras de levier avec troisième axe et galet, et épaisseur du basculeur à l'endroit de l'élément formant clapet).

Selon une réalisation la surface de poussée est parallèle au siège de clapet. Ceci forme une solution simple et facile à fabriquer, pour la partie concernée de la solution proposée. La chaine de cotes critique pour la position de fermeture est simplifiée.

Selon une réalisation, il est prévu au moins une première butée d'ouverture limitant le mouvement angulaire du levier de commande à partir de la position de fermeture. Cette butée d'ouverture détermine un débit d'admission d'eau pour une pression de conduite d'admission donnée, par exemple pour un débit cible de 50 litres/heure.

Selon une réalisation, il est prévu une deuxième butée d'ouverture et une troisième butée d'ouverture définissant deux autres débits maximums d'admission d'eau. Selon une réalisation, chaque butée est formée par une cheville insérée dans un orifice. Par exemple on dispose 3 orifices, chacun correspondant à un débit d'eau maximum prescrit.

Selon une réalisation, il est prévu une butée de base pour le levier de commande, cette butée de base permettant de définir une position de fermeture pour le levier de commande, qui correspond à la position fermée de du clapet.

On remarque que la butée de base est située à une distance conséquente de l'axe de pivot (deuxième axe) ce qui permet d'avoir une précision importante concernant la position angulaire souhaitée pour la position de fermeture du robinet automatique.

Selon une réalisation, il est prévu une commande de fermeture manuelle, déplaçable entre une position inactive et une position active, agissant directement sur le basculeur, indépendamment de la position du levier de commande et du flotteur, de sorte à permettre à un utilisateur de provoquer une fermeture permanente du clapet et d'inhiber ainsi la fonction de remplissage automatique, lorsque la commande de fermeture manuelle est amenée en position active.

Cette commande de fermeture manuelle forme une fonction classique de robinet d'arrêt. Cette fonction permet de mettre hors service l'abreuvoir concerné.

On remarque que la commande de fermeture manuelle agissant directement sur le basculeur, la chaîne de cotes impliquée pour déterminer la position du basculeur est courte et bien maîtrisée, et il en est de même pour la précontrainte générée dans l'élément formant clapet dans la position de fermeture.

Selon une réalisation, l'encombrement du dispositif de remplissage automatique en X est inférieur à 140 mm, l'encombrement en Y est inférieur à 140 mm, X et Y étant les deux directions horizontales du dispositif.

Ceci forme une solution très compacte pour le dispositif de remplissage automatique.

Selon une réalisation, le flotteur comprend deux joues latérales et une portion centrale en forme de vallée. Ainsi les deux joues latérales peuvent remonter de part et d'autre du corps de base, de manière à former ainsi une solution compacte selon la verticale Z.

Selon une réalisation, le levier de commande est relié au flotteur par une bielle. La bielle en question peut être une bielle à longueur ajustable ou une bielle à plusieurs points d'attache. En pratique, il peut s'agir d'une bielle à longueur réglable ou bien il peut s'agir du point d'attache du flotteur à la bielle dont la position est ajustable, ce qui revient de fait à une bielle à longueur ajustable.

Selon une réalisation, la bielle est montée pivotante par rapport au levier de commande autour d'un quatrième axe.

Moyennant quoi, nous disposons d'un réglage possible du niveau d'eau de consigne, le niveau d'eau de consigne étant la conséquence directe de la longueur de la bielle. Le niveau d'eau de consigne est élevé lorsque la bielle est courte, et inversement le niveau d'eau de consigne est bas lorsque la bielle est longue.

Selon une réalisation, l'articulation entre la bielle et le flotteur est une articulation pivot ou rotule. Grâce à quoi cette articulation permet un mouvement vertical guidé pour le flotteur, nonobstant le mouvement en arc de cercle du quatrième axe qui relie le bras long du levier de commande à la bielle.

Il n'est pas pour autant exclu d'avoir une liaison rigide entre la bielle et le flotteur.

Selon une réalisation, le flotteur est guidé dans un mouvement de monte et baisse par des éléments de guidage, selon un mouvement général en translation selon l'axe vertical Z sous le corps de base.

Selon une réalisation, il est prévu un rapport de bras de levier défini comme le rapport entre un premier bras de levier **BL1** séparant le deuxième axe du quatrième axe, et un deuxième bras de levier BL2 défini comme la distance entre le deuxième axe et la jante périphérique radialement extérieure du galet pousseur, le rapport de bras de levier **BL1** / BL2 étant compris entre 2 et 4, et de préférence entre 2,5 et 3.

Un tel rapport de bras de levier optimise la gestion des efforts et des courses dans le dispositif de remplissage automatique, comme il sera vu plus en détail plus loin.

La présente invention vise aussi un abreuvoir comprenant un dispositif de remplissage automatique tel que défini précédemment.

L'invention sera davantage détaillée par la description de modes de réalisation non limitatifs, et sur la base des figures annexées illustrant des variantes de l'invention, dans lesquelles :
- [Fig.1] illustre une vue en élévation et en coupe d'un abreuvoir équipé d'un robinet de remplissage automatique selon un exemple conforme à la présente invention ;
- [Fig.2] illustre en vue de dessus un abreuvoir équipé d'un robinet de remplissage automatique selon l'exemple de la figure 1 ;
- [Fig.3] montre schématiquement un exemple de mécanisme du dispositif de remplissage automatique illustrant les positions de fermeture et d'ouverture et la cinématique du levier de commande et du basculeur selon un premier mode de réalisation ;
- [Fig.4] montre schématiquement l'exemple du mécanisme du dispositif de remplissage automatique de la figure 3, en position de fermeture ;
- [Fig.5] montre schématiquement l'exemple du mécanisme du dispositif de remplissage automatique de la figure 3, en position d'ouverture ;
- [Fig.6] montre schématiquement l'exemple du mécanisme du dispositif de remplissage automatique de la figure 3, en position de fermeture forcée par le levier de commande manuelle ;
- [Fig.7] montre une vue spécifique en perspective d'un exemple de basculeur ;
- [Fig.8] montre une vue spécifique en perspective d'un exemple de levier de commande ;
- [Fig.9] montre une vue schématique de 3/4 face du dispositif de remplissage automatique selon le premier mode de réalisation en position de fermeture ;
- [Fig.10] est analogue à la figure 9, en vue depuis un autre point de vue, en position de fermeture ;
- [Fig.11] montre une vue schématique de 3/4 face du dispositif de remplissage automatique selon le premier mode de réalisation en position d'ouverture ;
- [Fig.12] montre une vue spécifique en perspective de dessous du corps de base seul dans l'exemple de réalisation des figures 9 à 12 ;
- [Fig.13] montre schématiquement un autre exemple de mécanisme du dispositif de remplissage automatique selon un deuxième mode de réalisation.

Sur les différentes figures, les mêmes références désignent des éléments identiques ou similaires. Pour des raisons de clarté de l'exposé, certains éléments ne sont pas nécessairement représentés à l'échelle.

On utilise ici un repère spatial orthogonal tel que la direction Z est la verticale locale, la direction X correspond à une direction longitudinale pour l'arrivée d'eau dans l'abreuvoir et la direction Y correspond à une direction dite 'transversale' ou 'latérale', perpendiculaire à la direction X. Le repère spatial orthogonal en question est généralement visible aux figures.

Dans les exemples illustrés, les montages à pivot comprennent tous un axe parallèle à la direction transversale Y.

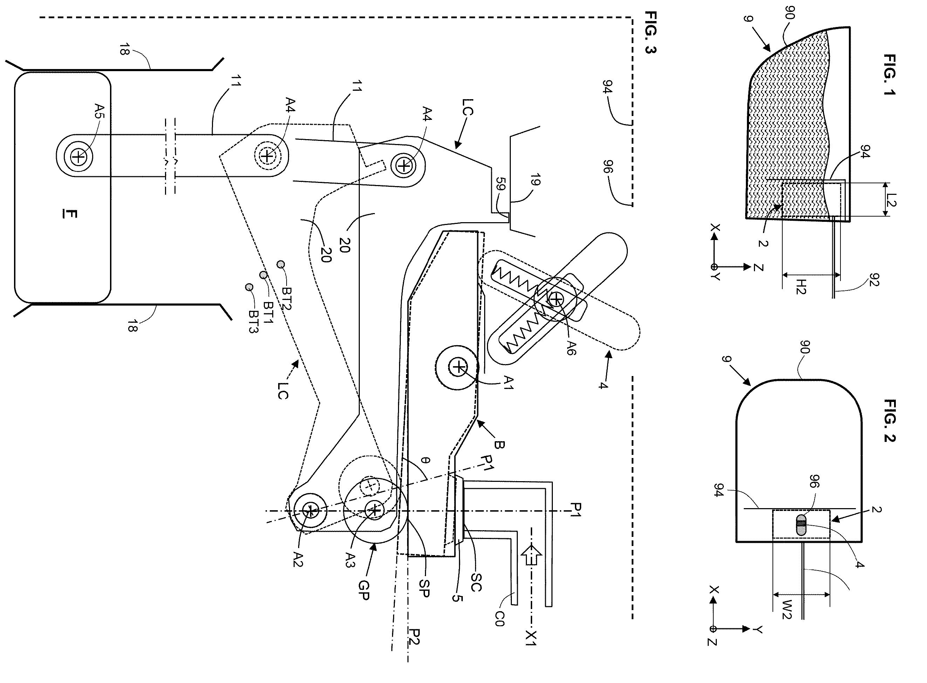

On a représenté aux figures 1 et 2 un abreuvoir 9 de petit volume, de type buvette de stabulation. L'abreuvoir est équipé d'un dispositif de remplissage automatique généralement repéré par la référence 2.

Bien entendu, le dispositif de remplissage automatique 2 peut convenir pour des abreuvoirs de plus grand volume.

L'abreuvoir comporte un corps principal en forme de cuvette **90** e.g. un corps concave robuste, avec une ouverture large vers le haut pour permettre l'accès du museau des animaux qui viennent s'abreuver à cet endroit. Les animaux en question peuvent être des bovins, des ovins, des porcins, des caprins, des équidés, et cetera.

Il est prévu une plaque de protection **94** pour protéger mécaniquement le dispositif de remplissage automatique **2** des agressions diverses et variées en provenance des animaux, mais aussi de tout objet qui pourrait tomber sur l'abreuvoir ou venir l'impacter.

La plaque de protection **94** comprend une portion horizontale qui recouvre le dispositif de remplissage automatique **2** et une portion verticale qui forme une séparation entre la zone de puisage utilisée par les animaux et la zone qui contient le dispositif de remplissage automatique **2.**

Il peut être prévu un dispositif de vidange (non représenté aux figures) pour vider l'eau présente dans la cuvette **90.**

Dans la portion horizontale de la plaque de protection, il est prévu une ouverture **96** qui laisse un accès pour au moins un doigt d'un utilisateur afin de modifier la position d'une commande de fermeture manuelle dont il sera question plus tard dans le présent document.

La plaque de protection **94** et le corps principal **90** sont chacun fabriqué en matériau qui peut être choisi parmi les matériaux métalliques, les matériaux synthétiques, les matériaux plastiques etc.

La dimension du dispositif de remplissage automatique **2** selon l'axe X, notée **L2,** est avantageusement inférieure à 140 mm.

La largeur **W2** (selon Y) est aussi avantageusement inférieure à 140 mm.

La hauteur **H2** dépend de la position du flotteur, on peut choisir une dimension de l'ordre de 240 mm pour la position la plus basse du flotteur.

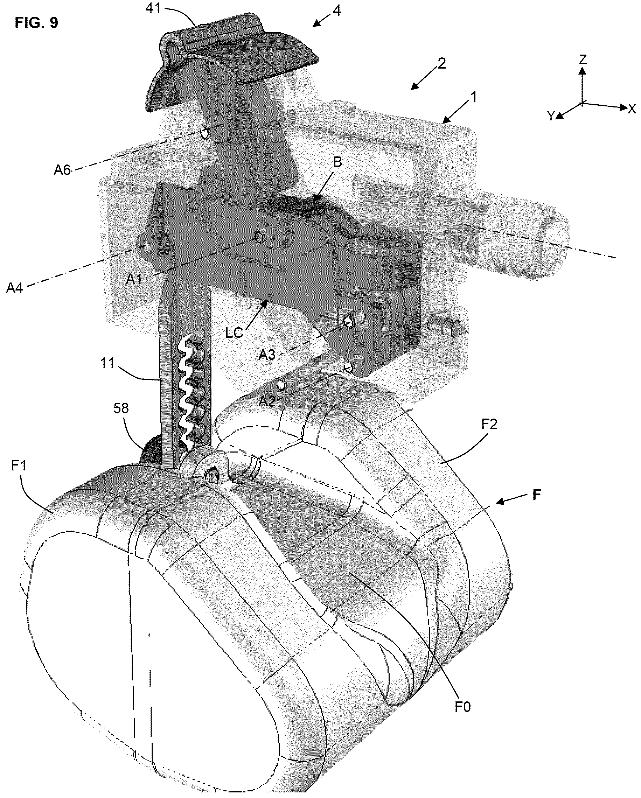

Le dispositif de remplissage automatique **2** comprend un corps de base noté **1** visible notamment aux figures 9 à 12.

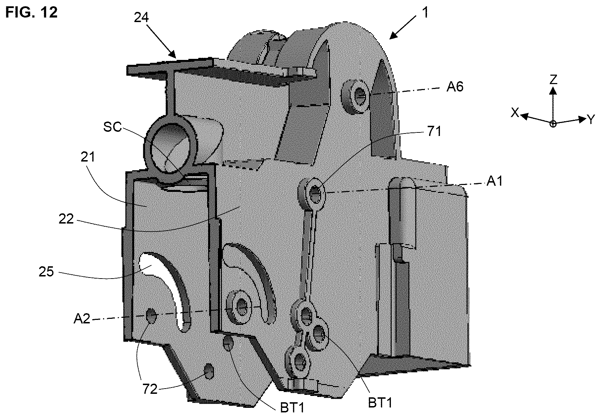

Le corps de base **1** comprend des paliers d'axe pour les éléments mobiles du mécanisme qui vont être décrits en détail ci-dessous. Des éléments de description complémentaires seront donnés en relation avec la figure 12 plus loin. Le corps de base **1** est réalisé par moulage en matière plastique.

Le dispositif de remplissage automatique **2** comprend une conduite d'arrivée eau **C0** raccordée à un tuyau d'arrivée d'eau **92.** La conduite d'arrivée eau peut être intégrée au corps de base 1, c'est-à-dire faire partie du corps de base. L'arrivée d'eau est orientée selon l'axe **X1.**

Il faut toutefois noter que l'arrivée d'eau peut être agencée sur le côté du réservoir ou même sous le réservoir. Dans l'exemple illustré, elle entre dans le robinet automatique à l'horizontale selon l'axe **X1.**

Dans le premier mode de réalisation, il est prévu un coude à 90° de sorte que l'orifice de distribution d'eau est dirigé vers le bas.

La pression de l'arrivée d'eau peut typiquement être comprise entre 2 et 5 bars. Selon un mode de réalisation, la pression dans la canalisation d'arrivée d'eau peut être voisine de 3 bars.

Il est prévu un orifice de distribution d'eau équipé d'un siège de clapet **SC.** Le centre du siège de clapet est repéré **CC.**

Le dispositif de remplissage automatique 2 comprend basculeur **B** équipé d'un élément formant clapet **5,** aussi appelé simplement 'clapet'. L'élément formant clapet **5** est apte à venir porter sur le siège de clapet **SC** pour fermer l'orifice de distribution d'eau. L'élément formant clapet **5** se présente comme un disque épais dont le diamètre excède le diamètre du siège de clapet **SC.** L'élément formant clapet **5** est par exemple fabriqué en matériau élastomère.

Le basculeur **B** est monté à rotation sur le corps de base autour d'un premier axe **A1.** Le premier axe **A1** est parallèle à la direction transverse Y. Un arbre d'axe est logé dans deux paliers **71** alignés ménagés dans le corps de base 1, situés de part et d'autre du corps du basculeur **B.** L'arbre d'axe est formé comme une cheville **CH1,** il peut être solidaire en rotation du basculeur ou bien il peut être fixe par rapport au corps de base.

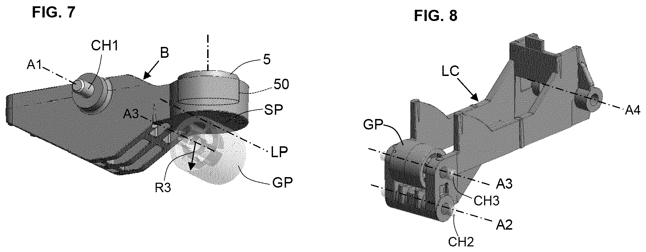

Un exemple de basculeur **B** est représentée à la figure 7. On remarque qu'il est conçu comme une poutre très robuste par rapport aux efforts de couple autour de l'axe **A1.** Sa section transversale est maximum à l'endroit de l'axe de rotation et va en diminuant vers la première extrémité où se trouve l'élément formant clapet et la deuxième extrémité où vient s'appuyer la commande de fermeture manuelle **4.**

Le basculeur **B** comprend un logement cylindrique **50** pour y recevoir sans jeu l'élément formant clapet **5** (cf. figure 7).

Le basculeur **B** est par exemple fabriqué en matériau plastique polymère, par exemple du polyamide.

Le dispositif de remplissage automatique 2 comprend un levier de commande **LC** monté pivotant sur le corps de base autour d'un deuxième axe **A2.** Le deuxième axe **A2** est parallèle à la direction transverse **Y.** Un arbre d'axe est reçu dans deux paliers **72** alignés du corps de base 1, situés de part et d'autre du corps levier de commande **LC.** L'arbre d'axe est formé comme une cheville **CH2,** qui peut être solidaire en rotation du levier de commande ou bien être fixe par rapport au corps de base 1.

Le levier de commande **LC** coopère avec le basculeur susmentionné via un galet monté pivotant sur le levier de commande autour d'un troisième axe **A3.** Le troisième axe **A3** est parallèle à la direction transverse **Y.** Un arbre d'axe reçu dans deux paliers alignés ménagés dans le levier de commande LC, situés de part et d'autre du galet.

Au vu de ses fonctions, le galet est appelé galet pousseur et noté **GP.**

La surface extérieure du galet pousseur est cylindrique. Le galet pousseur **GP** présente un rayon extérieur **R3.** Dans un exemple de réalisation, R3 peut être comprise entre 7 mm et 15 mm. Longueur du galet pousseur le long de l'axe A3 peut être comprise par exemple entre 10 et 20 mm, les valeurs numériques données ci-dessus n'étant pas considérées comme limitatives au sens de la présente invention.

Le levier de commande **LC** comprend un bras long **20** relié à une bielle **11,** elle-même reliée à un flotteur **F.**

Plus précisément, le bras long **20** du levier de commande est relié à son extrémité opposée au deuxième axe **A2** à la bielle **11,** moyennant une articulation pivot à l'endroit d'un quatrième axe **A4.** Dans l'exemple illustré, l'articulation pivot du quatrième axe A4 est formée par une cheville cylindrique insérée dans un palier cylindrique prévu en zone de bout du bras long **20** du levier de commande LC.

La bielle **11** est un élément à longueur ajustable. Dans l'exemple illustré, il est prévu des crans de réglage en position, définis à l'avance, verrouillables au moyen d'un système à molette **58.**

On ajuste ainsi le point d'attache du flotteur à la bielle, la longueur de bielle qui dépasse vers le bas n'a alors pas d'utilité, et la longueur de bielle utile correspond à la distance entre l'axe de pivot **A4** et l'axe de molette **58.**

On relève que tout autre moyen de réglage en longueur pourrait être adopté, à pas discret ou continu.

La personne du métier reconnaît que le réglage en longueur de la bielle permet de régler le niveau de consigne de niveau d'eau à l'intérieur de l'abreuvoir, comme déjà mentionné plus haut.

La bielle **11** est reliée au flotteur **F** moyennant une articulation pivot à l'endroit d'un cinquième axe **A5.**

L'articulation à cet endroit pourrait aussi être une articulation rotule.

L'articulation du cinquième axe **A5** offre un degré de liberté qui permet de prévoir un guidage vertical du flotteur alors que le quatrième axe **A4** décrit un arc de cercle.

Selon un autre mode de réalisation (mon représenté), le flotteur pourrait être relié de manière fixe à l'extrémité distale du bras long du levier de commande.

Ici, le flotteur est guidé selon un mouvement substantiellement vertical grâce à des glissières **18.** Ces glissières peuvent être des éléments spécifiques ou bien des éléments déjà existants, à savoir la paroi de la cuvette d'un côté ou de plusieurs côtés et la plaque de protection de l'autre côté.

Toute, tout moyen pour guider le flotteur substantiellement verticalement peut être considéré au sens de la présente invention.

La structure et la configuration du flotteur F seront décrits plus loin.

Il est toutefois d'ores et déjà remarquer que le flotteur est situé en dessous du corps de base du dispositif. Cette disposition spatiale est particulièrement bénéfique pour la bonne compacité du dispositif selon les directions horizontales X et Y.

Le galet pousseur **GP** est apte à pousser sur le basculeur **B** pour fermer le clapet.

On remarque que lorsque le galet pousseur **GP** est en contact avec le basculeur, on peut définir une ligne de contact aussi appelée ligne de poussée notée **LP** entre le galet pousseur et une surface du basculeur appelée ici surface de poussée **SP.**

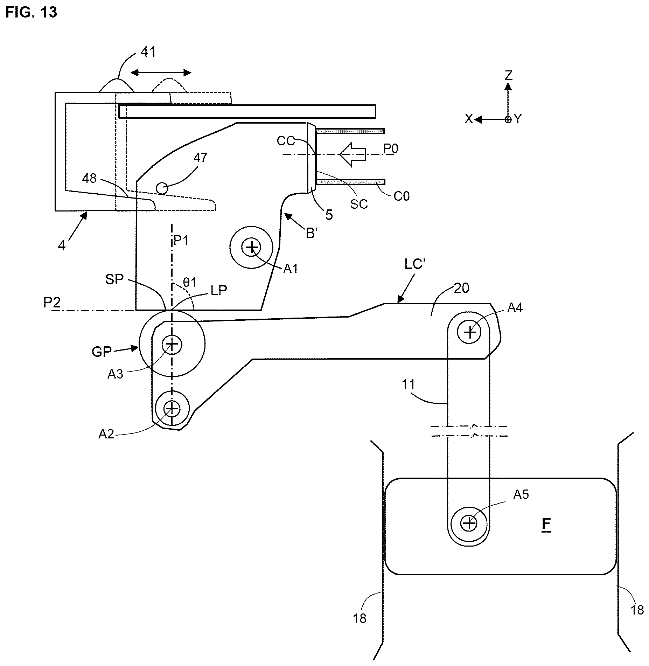

Selon l'exemple illustré ici, la surface de poussée SP est parallèle au siège de clapet **SC,** mais il pourrait en être autrement (cf. figure 13).

En partant de la définition de la ligne de poussée, on définit alors un premier plan **P1** qui passe d'une part par le deuxième axe **A2** et d'autre part par la ligne de poussée **LP** entre le galet pousseur **GP** et le basculeur **B.**

On remarque que le premier plan **P1** inclut la direction transverse Y.

Par ailleurs, localement, la surface de poussée **SP** est plane et s'étend selon un deuxième plan **P2** incluant lui aussi la direction transverse Y.

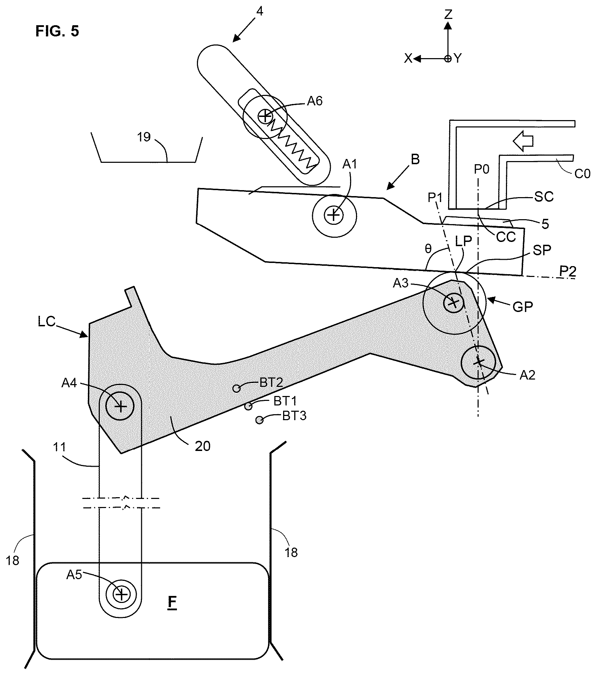

Comme visible aux figures 5 et 7, le premier plan **P1** intersecte le deuxième plan **P2** à l'endroit de la ligne de poussée **LP.**

On appelle premier angle noté **θ** l'angle qui existe entre le premier plan **P1** et le deuxième plan **P2.**

Avantageusement selon la présente invention, dans la position fermée du clapet, on observe que le premier angle, alors noté **θ1,** prend une valeur particulière proche de l'angle droit. On choisit de manière générale la configuration géométrique du système pour que le premier angle **θ1** soit compris entre 75° et 90°.

Selon un exemple particulier, de préférence, on conçoit la configuration géométrique du système pour que le premier angle **θ1** soit compris entre 80° et 89°.

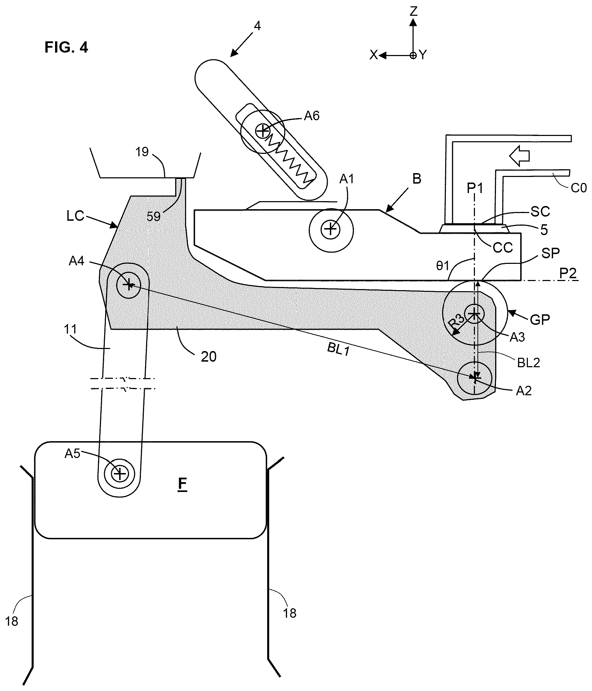

Il est prévu une butée angulaire de base pour la course du levier de commande. Plus précisément, comme visible aux figures 3 et 4, du côté de l'extrémité distale du bras long 20 du levier de commande, une portée **59** vient accoster sur une butée **19** ménagée dans le corps de base **1** du dispositif.

On remarque que selon une variante de réalisation non représentée aux figures, la butée 19 pourrait être une butée réglable, à savoir par exemple un goujon fileté reçu dans un trou taraudé dans le corps de base du dispositif.

Il faut remarquer que la butée angulaire de base se trouve à une distance importante de l'axe de rotation **A2** du levier de commande **LC,** à savoir en pratique plusieurs centimètres. Par conséquent, on peut définir avec précision la position angulaire du levier de commande correspondant à la position de fermeture du clapet, et donc maitriser la valeur particulière **θ1** du premier angle.

Grâce à la disposition géométrique de fermeture, on a quasiment un alignement entre le deuxième axe **A2** le troisième axe **A3** et le centre **CC** du siège de clapet CC (cf. figures 4 et 13).

On s'aperçoit dès lors que la poussée de flottaison du flotteur n'intervient quasiment plus dans l'effort qui maintient le clapet fermé. L'effort qui maintient la fermeture est seulement dicté par l'effet de came procuré par l'alignement du galet pousseur **GP** (en particulier son axe A3) interposé entre le centre **CC** du siège de clapet et l'axe de rotation **A2** du levier de commande

Pour autant, si le flotteur descend, le premier angle **θ** va diminuer et le levier de commande va baisser et s'éloigner de la position de fermeture.

Comme déjà évoqué, on s'assure de l'absence de blocage de la fonction genouillère en choisissant **θ1** < 90°. L'effet roulant du galet assure un retour en arrière du levier de commande LC sous le seul poids du flotteur en partie hors de l'eau.

Le dispositif de remplissage automatique **2** comprend un flotteur **F,** de densité moyenne inférieure à 1, dont on utilise la poussée de flottaison pour conduire à la fermeture du clapet de l'orifice d'admission d'eau

Le flotteur comprend deux joues latérales **F1** et **F2** et une portion centrale **F0** en forme de vallée.

Comme visible aux figures 9 à 11, chacune des joues latérales gauche et droite est plus volumineuse que la portion centrale. En particulier, leur sommet se trouve plus haut que la zone supérieure de la partie centrale qui forme en fait une vallée entre les deux sommets des joues latérales.

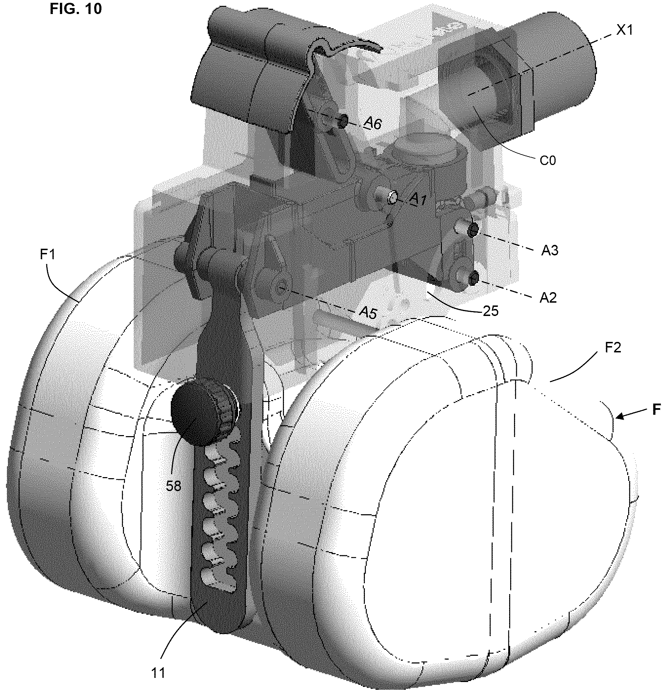

Ceci est en particulier visible sur la figure 10 où dans la position de niveau d'eau élevé, i.e. avec le réglage de la bielle à la longueur minimum, les joues latérales viennent encadrer le corps de base du dispositif. Cette astuce permet d'obtenir une compacité particulièrement intéressante selon l'axe vertical Z.

Le volume du flotteur **F** peut être de quelques litres. Selon un exemple particulier, on choisit pour le volume du flotteur une valeur comprise entre 0,5 litre et 2 litres. Par exemple, le volume du flotteur peut être voisin de 1 litre ce qui permet d'avoir un système très compact.

Du côté de l'ouverture maximum laissant passer le débit d'eau cible, il est prévu au moins une première butée d'ouverture notée **BT1** limitant le mouvement angulaire du levier de commande à partir de la position de fermeture.

Il s'ensuit que la course angulaire disponible pour le levier de commande est limitée d'une part par la butée de base **19** correspondant à la position de fermeture et d'autre part par la butée d'ouverture correspondant au débit d'eau maximum cible.

On remarque que cette course angulaire maximum peut être de l'ordre de 30 degrés à 60 degrés. En revanche, on remarque que la course angulaire du basculeur B est beaucoup plus petite, elle est généralement inférieure à une dizaine de degrés.

En outre, il est prévu optionnellement une deuxième butée d'ouverture **BT2** et une troisième butée d'ouverture **BT3** définissant deux autres débits maximums d'admission d'eau. Selon une réalisation, chaque butée est formée par une cheville insérée dans un orifice.

Dans l'exemple illustré aux figures 3 et 9 à 11, on dispose trois orifices, pour loger une cheville dans l'un des 3, chaque position correspondant à un débit d'eau maximum prescrit.

Par exemple, les débits d'eau maximum prescrits peuvent être respectivement 25 l/h, 50 l/h et 100 l/h.

De plus, il est prévu une commande de fermeture manuelle notée **4,** qui permet de bloquer l'arrivée d'eau quelle que soit la position du flotteur, c'est-à-dire en pratique d'inhiber l'abreuvoir en question.

La commande de fermeture manuelle **4** agit directement sur le basculeur B, indépendamment de la position du levier de commande et du flotteur, de sorte à permettre à un utilisateur de provoquer une fermeture permanente du clapet et d'inhiber ainsi la fonction de remplissage automatique.

La commande de fermeture manuelle **4** comprend une zone de manœuvre notée **41** et accessible depuis l'extérieur de l'abreuvoir comme illustré à la figure 2. De présence, la zone de manœuvre **41** peut comporter une bosse qui est manœuvrable par un doigt d'un utilisateur.

Dans l'exemple illustré aux figures 1 à 12, la commande de fermeture manuelle **4** est montée pivotante par rapport au corps de base 1 autour d'un axe d'articulation **A6.**

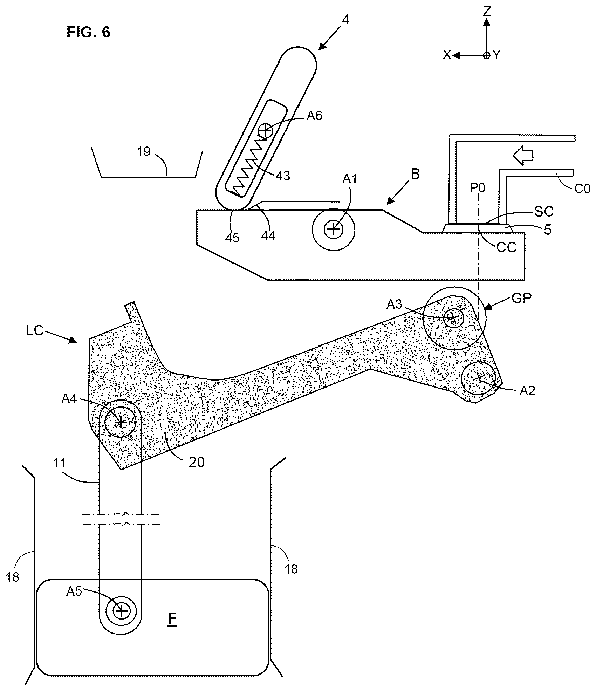

Dans les figures 3 à 5, la commande de fermeture manuelle est dans la position inactive, elle n'interfère pas avec le mouvement du basculeur. À l'inverse dans la figure 6, la commande de fermeture manuelle est dans la position active, c'est-à-dire qu'elle force la fermeture du clapet.

Dans la position active, l'extrémité basse **45** de la commande de fermeture manuelle vient pousser sur la surface supérieure du basculeur, dans une zone opposée au siège du clapet par rapport à l'axe de rotation du basculeur **A1.**

On remarque que les longueurs respectives des bras de levier de chaque côté par rapport à l'axe **A1** ne sont pas éloignés.

Il peut être prévu un ressort **43** assez raide pour solliciter l'extrémité basse en direction opposée à l'axe de rotation **A6** de la commande de fermeture manuelle. On garantit ainsi une bonne fermeture du clapet et un niveau de précontrainte souhaité dans l'élément formant clapet **5.**

Il peut être prévu en outre une rampe **44** qui produit un effet de came de nature à faire reculer l'extrémité basse **45** de la commande de fermeture manuelle à l'encontre du ressort **43,** lorsqu'on la déplace depuis la position active vers sa position inactive, de manière à éloigner la commande de fermeture manuelle du basculeur.

Plus généralement, la commande de fermeture manuelle est déplaçable entre une position inactive et une position active. En effet, comme ceci est visible concernant le deuxième de réalisation illustré sur la figure 13, la commande de fermeture manuelle **4** peut être montée selon un mouvement de translation.

Selon cette configuration, il est prévu une ou deux zones de rampe **48** sur la commande de fermeture manuelle qui coopèrent avec un ou deux pions **47** prévu dans les flancs du corps de base, afin de forcer la fermeture du basculeur B' ou à l'inverse de libérer la rotation du basculeur.

On remarque que sur la figure 13, le basculeur présente une forme différente et le siège **SC** du clapet se trouve dans un plan vertical **YZ,** alors que la surface de poussée **SP** se trouve dans un plan horizontal **XY.**

En revenant au mode de réalisation représenté aux figures 9 à 12, on s'intéresse aux bras de levier respectifs dans la cinématique de fermeture et d'ouverture du clapet.

On définit un premier bras de levier **BL1** séparant le deuxième axe **A2** du quatrième axe **A4,** ce premier bras de levier transmet l'effort de flottaison du flotteur **F** au levier de commande **LC.**

On définit un deuxième bras de levier **BL2** comme la distance entre le deuxième axe **A2** et la jante périphérique radialement extérieure du galet pousseur, à savoir **BL2** = distance **(A2-A3)** + rayon **R3.** Ce deuxième bras de levier BL2 transmet l'effort depuis le levier de commande vers le basculeur B via l'effet de came roulante procuré par le galet pousseur.

Les deux bras de levier en question sont visibles notamment à la figure 4.

Avantageusement selon la présente invention, il est proposé que le rapport de bras de levier **BL1** / **BL2** soit compris entre 2 et 4.

Selon un exemple particulier, le rapport de bras de levier **BL1** / **BL2** est compris 2,5 et 3.

On a ainsi une amplification apportée par les bras de levier respectifs, flotteur dimensionné au plus juste et agencé généralement sous le corps de base.

En se tournant vers la figure 12, le corps de base **1** du dispositif comprend une portion supérieure **24** qui reçoit notamment l'arrivée d'eau, la portion supérieure étant prolongée vers le bas par deux flasques latéraux **21, 22** en vis-à-vis l'un de l'autre, et qui délimitent ensemble un espace intérieur formant un logement pour le levier de commande et le basculeur.

Des paliers pour les articulations pivot d'axe **A1, A2** et **A6** son ménagés dans les deux flasques latéraux **21,22.**

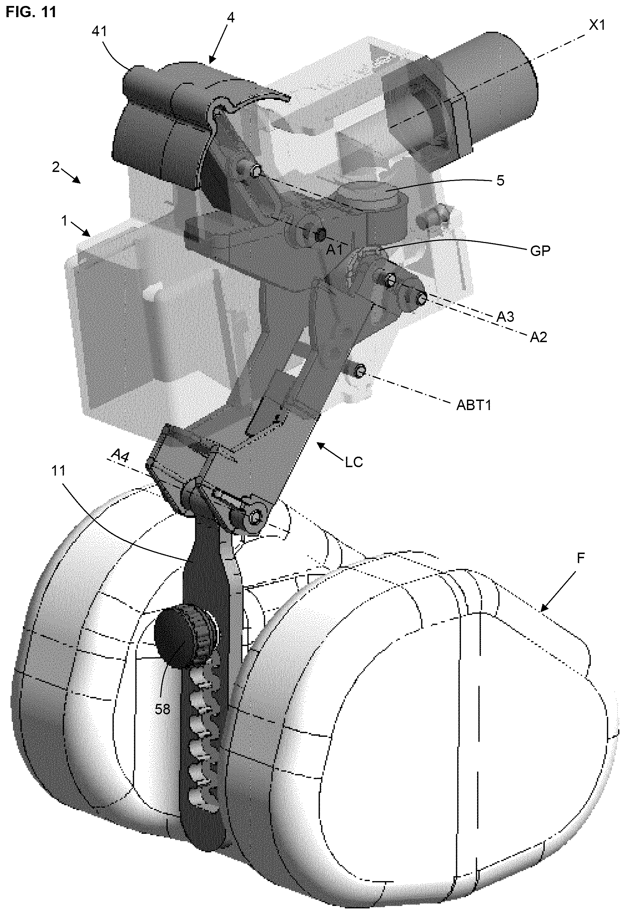

Par ailleurs, les orifices pour les butées d'ouverture maximum **BT1, BT2** et **BT3** sont également ménagés dans les deux flasques latéraux, pour recevoir une cheville de butée **ABT1** (cf. figure 11).

En outre, il est prévu des lumières **25** en forme d'arc de cercle dans chacun des flancs latéraux pour laisser passer la cheville de l'articulation d'axe **A3** embarquée sur le levier de commande et servant d'axe au galet pousseur.

Bien entendu, le corps de base du dispositif pourrait avoir une toute autre configuration, pour autant qu'il puisse permettre le positionnement correct des axes critiques **A1** et **A2** pour la coopération entre le levier de commande et le basculeur.

## Revendications

1. Dispositif de remplissage automatique de liquide (2) pour un abreuvoir (9) comprenant :
- un corps de base (1),
- une conduite d'arrivée d'eau (C0), présentant un orifice de distribution d'eau équipé d'un siège de clapet (SC),
- un basculeur (B) équipé d'un élément formant clapet (5), apte à venir porter sur le siège de clapet pour fermer l'orifice de distribution d'eau, le basculeur (B) étant monté à rotation sur le corps de base autour d'un premier axe (A1),
- un flotteur (F),
- un levier de commande (LC) monté pivotant sur le corps de base autour d'un deuxième axe (A2), comprenant un bras relié à son extrémité au flotteur et le levier de commande étant équipé d'un galet pousseur (GP), apte à pousser sur une surface de poussée (SP) du basculeur pour fermer le clapet,
dans lequel, dans la position fermée, l'agencement est tel qu'un premier plan (P1), défini comme un plan passant d'une part par le deuxième axe (A2) et d'autre part par une ligne de poussée (LP) entre le galet pousseur (GP) et la surface de poussée, présente un premier angle (θ1) par rapport à un deuxième plan (P2) défini comme le plan local de la surface de poussée (SP), et ledit premier angle (θ1) est compris entre 75° et 90°, et de préférence entre 80° et 89°.

2. Dispositif de remplissage automatique selon la revendication 1, dans lequel, dans la position fermée, l'agencement est tel que le premier plan (P1) passe en outre sensiblement par le centre (CC) du siège de clapet.

3. Dispositif de remplissage automatique selon l'une des revendications 1 à 2, dans lequel il est prévu au moins une première butée d'ouverture (BT1) limitant le mouvement angulaire du levier de commande à partir de la position de fermeture.

4. Dispositif de remplissage automatique selon l'une des revendications 1 à 3, dans lequel il est prévu une commande de fermeture manuelle (4), déplaçable entre une position inactive et une position active, agissant directement sur le basculeur (B), indépendamment de la position du levier de commande et du flotteur, de sorte à permettre à un utilisateur de provoquer une fermeture permanente du clapet et d'inhiber ainsi la fonction de remplissage automatique, lorsque la commande de fermeture manuelle est amenée en position active.

5. Dispositif de remplissage automatique selon l'une des revendications 1 à 4, dans lequel l'encombrement (L2) en X est inférieur à 140 mm, l'encombrement (W2) en Y est inférieur à 140 mm, X et Y étant les deux directions horizontales du dispositif.

6. Dispositif de remplissage automatique selon l'une des revendications 1 à 5, dans lequel le flotteur comprend deux joues latérales (F1,F2) et une portion centrale (F0) en forme de vallée.

7. Dispositif de remplissage automatique selon l'une des revendications 1 à 6, dans lequel le levier de commande (LC) est relié au flotteur par une bielle (11).

8. Dispositif de remplissage automatique selon la revendication 6, dans lequel ladite bielle est une bielle à longueur ajustable.

9. Dispositif de remplissage automatique selon l'une des revendications 1 à 8, dans lequel le flotteur (F) est guidé dans un mouvement général de monte et baisse par des éléments de guidage (18), selon un mouvement général en translation selon l'axe vertical (Z) sous le corps de base (1).

10. Dispositif de remplissage automatique selon la revendication 7, dans lequel la bielle (11) est montée pivotante par rapport au levier de commande (LC) autour d'un quatrième axe (A4).

11. Dispositif de remplissage automatique selon la revendication 10, dans lequel il est prévu un rapport de bras de levier défini comme le rapport entre un premier bras de levier BL1 séparant le deuxième axe (A2) du quatrième axe (A4), et un deuxième bras de levier BL2 défini comme la distance entre le deuxième axe (A2) et la jante périphérique radialement extérieure du galet pousseur, le rapport de bras de levier BL1 / BL2 étant compris entre 2 et 4, de préférence entre 2,5 et 3.

12. Abreuvoir comprenant un dispositif de remplissage automatique selon l'une quelconque des revendications 1 à 11.
